# EUROPEAN PATENT APPLICATION

(11) **EP 4 665 031 A1**
(43) Date of publication of application: **17.12.2025**
(21) Application number: 23921165.9
(22) Date of filing: 09.02.2023
(51) Int. Cl.: H04W 72/04, H04W 16/26

(54) **WIRELESS BASE STATION, WIRELESS RELAY DEVICE, MOVING BODY, WIRELESS COMMUNICATION SYSTEM, WIRELESS COMMUNICATION METHOD, AND PROGRAM**

(71) Applicant: HONDA MOTOR CO., LTD., Tokyo 105-8404 (JP)
(72) Inventor: OTAKA Masaru, Tokyo 107-8556 (JP)
(74) Representative: Weickmann & Weickmann PartmbB
(86) International application number: PCT/JP2023/004464
(87) International publication number: WO 2024/166334

(57) **Abstract**

A wireless base station is a wireless base station which performs wireless communication with a wireless relay apparatus, and the wireless base station includes: a storage unit which stores area identification information for identifying a predetermined cell area at least partially provided by one or more wireless base stations including the wireless base station; and a communication unit which transmits, to the wireless relay apparatus, the area identification information and first information indicating a resource available to the wireless relay apparatus within the cell area, in which the communication unit receives, from the wireless relay apparatus, second information indicating a resource used by the wireless relay apparatus, and the wireless base station further includes a control unit which performs processing for holding information on the resource used by the wireless relay apparatus in the one or more wireless base stations, based on the second information.

## Description

### BACKGROUND

### 1. TECHNICAL FIELD

The present invention relates to a wireless base station, a wireless relay apparatus, a mobile body, a wireless communication system, a wireless communication method, and a program.

### 2. RELATED ART

Patent Documents 1 to 4 describe techniques related to mobile body communication. In recent years, research and development on secondary batteries and the like that contribute to improvement of energy efficiency have been conducted in order to ensure that more people have affordable and reliable access to sustainable and advanced energy.

### Citation List

### Patent Documents

Patent Document 1: Japanese Patent No. 6586515
Patent Document 2: Japanese Patent Application Publication No. 2020-161951
Patent Document 3: Japanese Patent No. 5823059
Patent Document 4: International Publication No. 2006/126261

### PROBLEM TO BE SOLVED

Incidentally, in mobile communication performed by the mobile body, there is a problem that, when wireless resources used by neighboring mobile bodies conflict with each other, it may become necessary to output radio waves at higher power in order to cope with interference. An object of the present application is to prevent conflicts in wireless resources in order to solve the above-described problem. Furthermore, this also contributes to the improvement of energy efficiency.

### GENERAL DISCLOSURE

In a first aspect of the present invention, there is provided a wireless base station. The wireless base station performs wireless communication with a wireless relay apparatus. The wireless base station includes a storage unit which stores area identification information for identifying a cell area including a cell formed by at least one of one or more wireless base stations including the wireless base station or one or more wireless relay apparatuses including the wireless relay apparatus. The wireless base station includes a communication unit which transmits, to the wireless relay apparatus, the area identification information and first information indicating a resource available to the wireless relay apparatus within the cell area. The communication unit receives, from the wireless relay apparatus, second information indicating a resource used by the wireless relay apparatus. The wireless base station further includes a control unit which performs processing for holding information on the resource used by the wireless relay apparatus in the one or more wireless base stations, based on the second information.

In the above-described wireless base station, the second information may include mobility information indicating whether or not the wireless relay apparatus is a movable relay apparatus. When it is determined based on the mobility information included in the second information that the wireless relay apparatus is a movable relay apparatus, the control unit may perform processing for holding information on the resource used by the wireless relay apparatus in the one or more wireless base stations.

In any of the above-described wireless base stations, when the cell area includes cells of a plurality of wireless base stations including the wireless base station, the communication unit may transmit, to another wireless base station among the plurality of wireless base stations, information indicating the resource, which is used by the wireless relay apparatus, indicated by the second information.

In any of the above-described wireless base stations, the communication unit may include the area identification information and the first information in broadcast information and transmit the broadcast information.

In a second aspect of the present invention, there is provided a wireless communication system. The wireless communication system includes: any of the above-described wireless base stations; and the wireless relay apparatus.

In a third aspect of the present invention, there is provided a program. The program causes a computer to function as any of the above-described wireless base stations.

In a fourth aspect of the present invention, there is provided a wireless relay apparatus. The wireless relay apparatus relays communication between a wireless base station and a terminal apparatus. The wireless relay apparatus includes a communication unit which receives, from the wireless base station, area identification information for identifying a cell area including a cell formed by at least one of one or more wireless base stations including the wireless base station or one or more wireless relay apparatuses including the wireless relay apparatus, and first information indicating a resource available to the wireless relay apparatus within the cell area. The communication unit transmits, to another wireless communication apparatus, the area identification information and information indicating the resource available to the wireless relay apparatus within the cell area. The communication unit receives, from the wireless relay apparatus, second information indicating a resource used by the another wireless communication apparatus. The wireless relay apparatus includes a control unit which performs processing for holding information on the resource used by the another wireless communication apparatus in the one or more wireless relay apparatuses, based on the second information.

In the above-described wireless relay apparatus, the second information may include mobility information indicating whether or not the another wireless communication apparatus is a movable wireless relay apparatus. When it is determined based on the mobility information included in the second information that the another wireless communication apparatus is a movable wireless relay apparatus, the control unit may perform processing for holding information on the resource used by the another wireless communication apparatus in the one or more wireless relay apparatuses.

In any of the above-described relay apparatuses, when the cell area includes cell areas of a plurality of wireless relay apparatuses including the wireless relay apparatus, the communication unit may transmit, to another wireless relay apparatus among the plurality of wireless relay apparatuses, information indicating the resource, which is used by the another wireless communication apparatus, indicated by the second information.

In any of the above-described relay apparatuses, the communication unit may receive the area identification information and the first information from the wireless base station via broadcast information.

In any of the above-described relay apparatuses, the communication unit may include, in broadcast information, the area identification information and the information indicating the resource available to the wireless relay apparatus within the cell area and transmit the broadcast information to the another wireless communication apparatus.

In a fifth aspect of the present invention, there is provided a mobile body. The mobile body includes any of the above-described wireless relay apparatuses.

In a sixth aspect of the present invention, there is provided a wireless communication system. The wireless communication system includes: any of the above-described wireless relay apparatuses; and the wireless base station.

In a seventh aspect of the present invention, there is provided a program. The program causes a computer to function as any of the above-described wireless relay apparatuses.

In an eighth aspect of the present invention, there is provided a wireless communication method. The wireless communication method is executed by a wireless base station which performs wireless communication with a wireless relay apparatus. The wireless communication method includes storing area identification information for identifying a cell area including a cell formed by at least one of one or more wireless base stations including the wireless base station or one or more wireless relay apparatuses including the wireless relay apparatus. The wireless communication method includes transmitting, to the wireless relay apparatus, the area identification information and first information indicating a resource available to the wireless relay apparatus within the cell area. The wireless communication method includes receiving, from the wireless relay apparatus, second information indicating a resource used by the wireless relay apparatus. The wireless communication method includes performing processing for holding information on the resource used by the wireless relay apparatus in the one or more wireless base stations, based on the second information.

In a ninth aspect of the present invention, there is provided a wireless communication method. The wireless communication method is executed by a wireless relay apparatus which relays communication between a wireless base station and a terminal apparatus. The wireless communication method includes receiving, from the wireless base station, area identification information for identifying a cell area including a cell formed by at least one of one or more wireless base stations including the wireless base station or one or more wireless relay apparatuses including the wireless relay apparatus, and first information indicating a resource available to the wireless relay apparatus within the cell area. The wireless communication method includes transmitting, to another wireless communication apparatus, the area identification information and information indicating the resource available to the wireless relay apparatus within the cell area. The wireless communication method includes receiving, from the wireless relay apparatus, second information indicating a resource used by the another wireless communication apparatus. The wireless communication method includes performing processing for holding information on the resource used by the another wireless communication apparatus in the one or more wireless relay apparatuses, based on the second information.

The summary clause does not necessarily describe all necessary features of the embodiments of the present invention. In addition, the present invention may also be a sub-combination of the features described above.

### BRIEF DESCRIPTION OF THE DRAWINGS

Fig. 1 schematically illustrates a configuration of a wireless communication system 5 according to an embodiment.
Fig. 2 illustrates an example of a system configuration of a wireless relay apparatus 110.
Fig. 3 illustrates an example of a system configuration of a wireless base station 120.
Fig. 4 illustrates an example of a data structure of a use resource table for managing resources.
Fig. 5 illustrates an example of a sequence according to a wireless communication method executed in the wireless communication system 5.
Fig. 6 illustrates an example of the sequence according to the wireless communication method executed in the wireless communication system 5.
Fig. 7 illustrates an example of the sequence according to the wireless communication method executed in the wireless communication system 5.
Fig. 8 illustrates an example of a computer 2000 in which a plurality of embodiments of the present invention may be entirely or partially embodied.

### DESCRIPTION OF EXEMPLARY EMBODIMENTS

Hereinafter, the present invention will be described through embodiments of the invention, but the following embodiments do not limit the invention according to the claims. In addition, not all of the combinations of features described in the embodiments are essential to the solution of the invention.

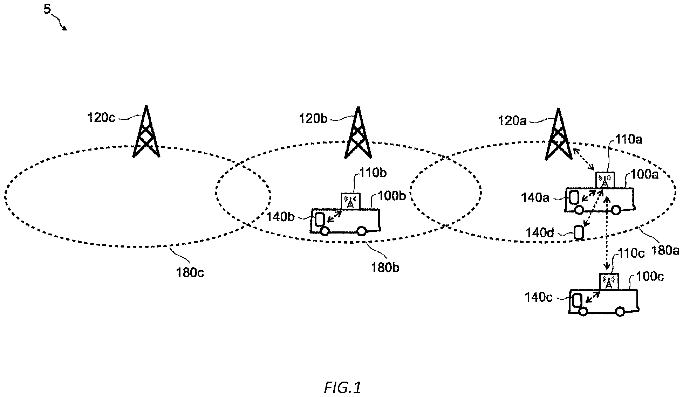

Fig. 1 schematically illustrates a configuration of a wireless communication system 5 according to an embodiment. The wireless communication system 5 includes a wireless base station 120a, a wireless base station 120b, and a wireless base station 120c, a wireless relay apparatus 110a, a wireless relay apparatus 110b, and a wireless relay apparatus 110c, a mobile body 100a and a mobile body 100b, and a terminal apparatus 140a, a terminal apparatus 140b, a terminal apparatus 140c, and a terminal apparatus 140d.

In the present embodiment, the wireless base station 120a, the wireless base station 120b, and the wireless base station 120c may be collectively referred to as a "wireless base station 120" with suffixes of reference numerals omitted. Similarly, the wireless relay apparatus 110a, the wireless relay apparatus 110b, and the wireless relay apparatus 110c may be collectively referred to as a "wireless relay apparatus 110" with suffixes of the reference numeral omitted. Similarly, the mobile body 100a, the mobile body 100b, and the mobile body 100c may be collectively referred to as a "mobile body 100" with suffixes of the reference numeral omitted. Similarly, the terminal apparatus 140a, the terminal apparatus 140b, the terminal apparatus 140c, and the terminal apparatus 140d may be collectively referred to as a "terminal apparatus 140" with suffixes of reference numerals omitted.

The wireless base station 120 is a mobile communication base station that supports one or more mobile communication schemes. Similarly, the wireless relay apparatus 110 and the terminal apparatus 140 are wireless communication apparatuses that support one or more mobile communication schemes. In the present embodiment, the mobile communication schemes supported by the wireless base station 120, the wireless relay apparatus 110, and the terminal apparatus 140 may be, for example, a mobile scheme communication used in a mobile communication system such as a 4th generation mobile communication system (4G) or a 5th generation mobile communication system (5G).

The wireless base station 120 is a base station fixed at a specific position. Each wireless base station 120 forms a cell and performs wireless communication with the wireless relay apparatus 110 and the terminal apparatus 140 by forming the cell. For example, a cell 180a is a cell formed by the wireless base station 120a, a cell 180b is a cell formed by the wireless base station 120b, and a cell 180c is a cell formed by the wireless base station 120c. In the present embodiment, the cell 180a, the cell 180b, and the cell 180c may be collectively referred to as a "cell 180" with suffixes of reference numeral omitted.

The wireless relay apparatus 110 has a function as a wireless base station to provide a service with respect to the terminal apparatus 140 and a function as a terminal apparatus to receive a provided service with respect to the wireless base station 120. The wireless relay apparatus 110 relays communication between the terminal apparatus 140 and the wireless base station 120. The terminal apparatus 140 can access a core network via the wireless base station 120. The terminal apparatus 140 may be able to access the core network via the wireless relay apparatus 110 and the wireless base station 120 even when the terminal apparatus 140 cannot directly perform wireless communication with the wireless base station 120.

The mobile body 100 is movable equipment. The mobile body 100 is, for example, an automobile such as a bus or a vehicle such as a train. The vehicle is an example of transportation equipment. The mobile body may be various aircraft including an unmanned aerial vehicle, an artificial satellite, a ship, or the like. The mobile body 100a includes the wireless relay apparatus 110a. The mobile body 100b includes the wireless relay apparatus 110b. Therefore, the wireless relay apparatus 110a is movable together with the mobile body 100a, and the wireless relay apparatus 110b is movable together with the mobile body 100b.

Therefore, when the mobile body 100a is located within the cell 180a of the wireless base station 120a, the wireless relay apparatus 110a relays communication between the terminal apparatus 140a held by a user riding on the mobile body 100a and the wireless base station 120a. Further, the wireless relay apparatus 110a relays communication between the terminal apparatus 140d located near the wireless relay apparatus 110a and the wireless base station 120a. Further, the wireless relay apparatus 110a relays communication between the wireless relay apparatus 110c located near the wireless relay apparatus 110a and the wireless base station 120a. Further, the wireless relay apparatus 110a and the wireless relay apparatus 110c relay communication between the terminal apparatus 140c held by the user riding on the wireless relay apparatus 110c and the wireless base station 120a. When the mobile body 100b is located within the cell 180b of the wireless base station 120b, the wireless relay apparatus 110b relays communication between the terminal apparatus 140b held by the user riding on the mobile body 100b and the wireless base station 120b.

In the wireless communication system 5 of the present embodiment, the wireless base station 120 ensures that resources used for wireless communication by the wireless relay apparatus 110 do not overlap with each other within a specific cell area including the cell 180 formed by one or more specific wireless base stations 120. For example, when the cell area for the wireless relay apparatus 110 is provided by the cell 180a formed by the wireless base station 120a and the cell 180b formed by the wireless base station 120b, the wireless base station 120 performs control such that a resource used for wireless communication by the wireless relay apparatus 110a located within the cell area does not coincide with a resource used for wireless communication by the wireless relay apparatus 110b. Accordingly, even when the mobile body 100a and the mobile body 100b move within the cell area, the wireless communication by the wireless relay apparatus 110 can be maintained.

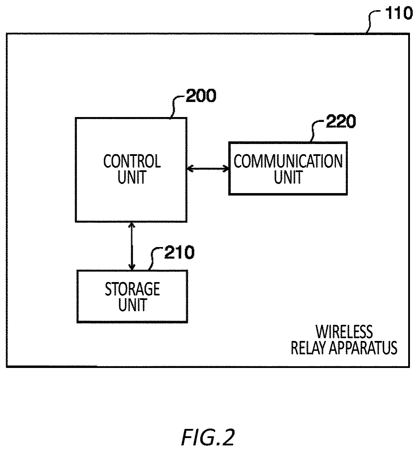

Fig. 2 illustrates an example of a system configuration of the wireless relay apparatus 110. The wireless relay apparatus 110 relays the communication between the wireless base station 120 and the terminal apparatus 140. The wireless relay apparatus 110 includes a control unit 200, a storage unit 210, and a communication unit 220.

The control unit 200 controls the entire wireless relay apparatus 110. The communication unit 220 is responsible for wireless communication between the wireless base station 120 and the terminal apparatus 140. The control unit 200 is implemented by an arithmetic processing apparatus including a processor. The storage unit 210 is implemented by including a nonvolatile storage medium. The control unit 200 performs processing by using information stored in the storage unit 210. The control unit 200 may be implemented by a microcomputer including a CPU, a ROM, a RAM, an I/O, a bus, or the like. The wireless relay apparatus 110 may be implemented by a computer. The wireless relay apparatus 110 may be implemented by a single computer. The wireless relay apparatus 110 may be implemented by a plurality of computers. A function of the wireless relay apparatus 110 may be implemented by a virtual system realized using a virtualization technology.

The communication unit 220 receives, from the wireless base station 120, area identification information for identifying a cell area including a cell formed by at least one of one or more wireless base stations 120 and one or more wireless relay apparatuses 110 including its own wireless relay apparatus 110, and first information indicating a resource available to the wireless relay apparatus 110 within the cell area. The communication unit 220 transmits, to another wireless communication apparatus, the area identification information and the information indicating the resource available to the wireless relay apparatus 110 within the cell area, and receives, from the wireless relay apparatus 110, second information indicating a resource used by the another wireless communication apparatus. Based on the second information, the control unit 200 performs processing for holding information on the resource used by the another wireless communication apparatus in one or more wireless relay apparatuses 110. Here, the "another wireless communication apparatus" is, for example, the terminal apparatus 140 and/or another wireless relay apparatus 110.

The second information includes mobility information indicating whether or not the another wireless communication apparatus is the wireless relay apparatus 110 which is movable. When it is determined based on the mobility information included in the second information that the another wireless communication apparatus is the wireless relay apparatus 110 which is movable, the control unit 200 performs the processing for holding the information on the resource used by the another wireless communication apparatus in one or more wireless relay apparatuses 110.

When the cell area includes cells of a plurality of wireless relay apparatuses 110 including its own wireless relay apparatus 110, the communication unit 220 transmits, to another wireless relay apparatus 110 among the plurality of wireless relay apparatuses 110, information indicating the resource, which is used by the another wireless communication apparatus, indicated by the second information. Accordingly, the information on the resource used by the terminal apparatus 140 can be shared with the another wireless relay apparatuses 110.

The communication unit 220 receives the area identification information and the first information from the wireless base station 120 via broadcast information. The communication unit 220 includes, in the broadcast information, the area identification information and the information indicating the resource available to the wireless relay apparatus 110 within the cell area and transmits the broadcast information to another wireless communication apparatus. The broadcast information is, for example, system information. The system information is, for example, a system information block (SIB).

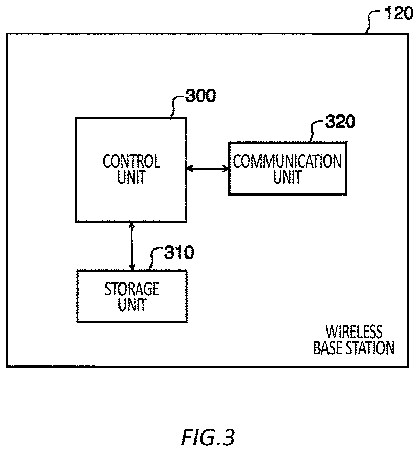

Fig. 3 illustrates an example of a system configuration of the wireless base station 120. The wireless base station 120 performs wireless communication with the wireless relay apparatus 110. The wireless base station 120 performs wireless communication with one or more wireless relay apparatuses 110. The wireless base station 120 includes a control unit 300, a storage unit 310, and a communication unit 320.

The control unit 300 controls the entire wireless base station 120. The communication unit 320 is responsible for wireless communication between the wireless relay apparatus 110 and the terminal apparatus 140. The control unit 300 is implemented by an arithmetic processing apparatus including a processor. The storage unit 310 is implemented by including a nonvolatile storage medium. The control unit 300 performs processing by using information stored in the storage unit 310. The control unit 300 may be implemented by a microcomputer including a CPU, a ROM, a RAM, an I/O, a bus, or the like. The wireless base station 120 may be implemented by a computer. The wireless base station 120 may be implemented by a single computer. The wireless base station 120 may be implemented by a plurality of computers. A function of the wireless base station 120 may be implemented by a virtual system realized using a virtualization technology.

The storage unit 310 stores the area identification information for identifying a cell area including a cell formed by at least one of one or more wireless base stations 120 including its own wireless base station 120 and one or more wireless relay apparatuses 110. The communication unit 320 transmits, to the wireless relay apparatus 110, the area identification information and the first information indicating the resource available to the wireless relay apparatus 110 within the cell area. The communication unit 320 receives, from the wireless relay apparatus 110, the second information indicating the resource used by the wireless relay apparatus 110. Based on the second information, the control unit 300 performs processing for holding information on the resource used by the wireless relay apparatus 110 in one or more wireless base stations 120. Accordingly, it is possible to the information on the resource used by the wireless relay apparatus 110.

The second information includes mobility information indicating whether or not the wireless relay apparatus 110 is a movable relay apparatus. When it is determined based on the mobility information included in the second information that the the wireless relay apparatus 110 is a movable relay apparatus, the control unit 300 performs the processing for holding the information on the resource used by the wireless relay apparatus 110 in one or more wireless base stations 120.

When the cell area includes cell areas of a plurality of wireless base stations 120 including the wireless base station 120, the communication unit 320 transmits, to another wireless base station 120 among the plurality of wireless base stations 120, information indicating the resource, which is used by the wireless relay apparatus 110, indicated by the second information. Accordingly, the information on the resource used by the wireless relay apparatus 110 can be shared among the plurality of wireless base stations 120 forming the cells included in the cell area. Therefore, it is possible to ensure that the resources used by the plurality of wireless relay apparatuses 110 in the cell area do not coincide with each other.

The communication unit 320 may include the area identification information and the first information in broadcast information and transmit the broadcast information. The broadcast information is, for example, system information. The system information is, for example, a system information block (SIB).

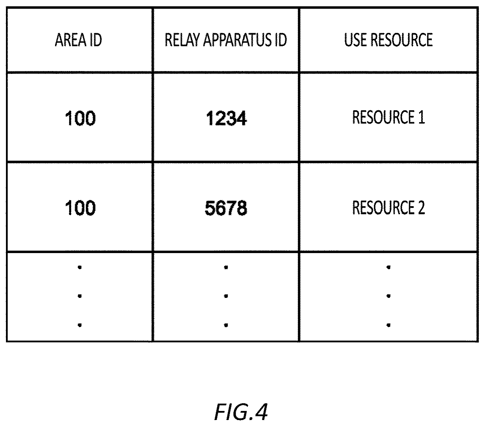

Fig. 4 illustrates an example of a data structure of a use resource table for managing resources. The use resource table includes an area ID, a relay apparatus ID, and a use resource as data items. The "area ID" is area identification information for identifying a cell area. The "relay apparatus ID" is identification information for the wireless relay apparatus 110 to which a resource is allocated. The "use resource" is information indicating a resource used by the wireless relay apparatus 110 identified by the "relay apparatus ID". The resource is a wireless resource specified by a time axis and a frequency axis.

When the wireless base station 120 manages resources, the use resource table is stored in the storage unit 310 of the wireless base station 120. When the wireless relay apparatus 110 manages resources, the use resource table is stored in the storage unit 210 of the wireless relay apparatus 110.

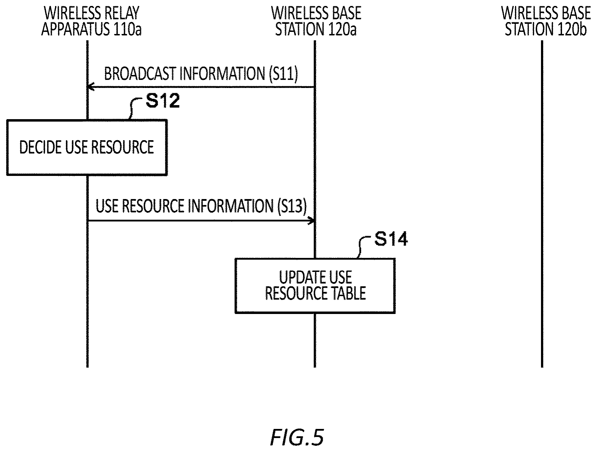

Fig. 5 illustrates an example of a sequence according to a wireless communication method executed in the wireless communication system 5. Here, an example of a sequence in which a cell area is determined by a cell formed by the wireless base station 120a and a resource to be used by the wireless relay apparatus 110a within the cell area is allocated will be described.

In S11, the wireless base station 120a transmits broadcast information. The broadcast information includes, for example, area identification information for identifying a cell area and first information indicating a resource available in the cell area. The first information may include information indicating a resource used by the wireless relay apparatus 110 in the cell area and a resource already used by another wireless relay apparatus 110. The first information may include information indicating a resource not used by another wireless relay apparatus 110 among resources used in the cell area.

In the wireless relay apparatus 110a, when the communication unit 220 receives the broadcast information, in S12, the control unit 200 decides a resource to be used, based on the first information. In S13, the communication unit 220 of the wireless relay apparatus 110a transmits use resource information. The use resource information includes, for example, type information of the wireless relay apparatus 110a and second information indicating the resource decided by the control unit 200. The type information is information indicating whether or not the wireless relay apparatus 110a is a movable relay apparatus. The type information is, for example, "Vehicle". The "Vehicle" indicates that the wireless relay apparatus 110a is a movable relay apparatus.

In the wireless base station 120a, when the communication unit 320 receives the use resource information, in S14, the control unit 300 updates the use resource table. For example, the control unit 300 updates the use resource table in response to determination, based on the type information included in the use resource information, that the wireless relay apparatus 110a is a movable relay apparatus. For example, the control unit 300 may add, to the use resource table, information indicating the resource indicated by the second information.

As an example, each of the broadcast information and the use resource information may be included in the SIB, an RRC_Connection_Setup message, and an RRC_Connection_Setup_Complete message. The use resource information may be included in an RRC_Connection_Request message. The use resource information may be included in an RRC_Setup_Request message or an RRC_Setup_Complete message.

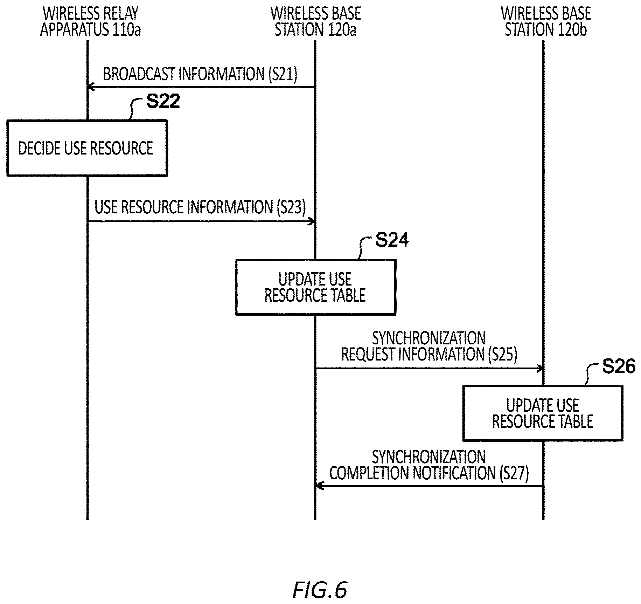

Fig. 6 illustrates an example of the sequence according to the wireless communication method executed in the wireless communication system 5. Here, an example of a sequence in which a cell area is determined by the cell 180a formed by the wireless base station 120a and the cell 180b formed by the wireless base station 120b, and a resource to be used by the mobile body 100a within the cell area is allocated will be described.

Since processing from S21 to S24 in Fig. 6 is the same as the processing from S11 to S14 in Fig. 5, description thereof will be omitted. After executing the processing of S24, in S25, the communication unit 320 of the wireless base station 120a transmits synchronization request information to the wireless base station 120b. The synchronization request information includes area identification information for a cell area and information on a resource used by the wireless relay apparatus 110a.

When the communication unit 320 of the wireless base station 120b receives the synchronization request information, in S26, the control unit 300 of the wireless base station 120b updates a use resource table cell similarly to S14.

Subsequently, in S27, the communication unit 320 of the wireless base station 120b transmits a synchronization completion notification to the wireless base station 120a. Note that the synchronization request information and the synchronization completion notification may be a connection-type inter-apparatus synchronization message and an inter-apparatus synchronization message response. In another aspect, the synchronization request information may be transmitted in a connectionless manner.

According to the sequence of Fig. 6, when the cell area includes the cell 180a and the cell 180b, the communication unit 320 transmits, to another wireless base station 120, the information on the resource used by the wireless relay apparatus 110a. Accordingly, the use resource information can be synchronized among a plurality of wireless base stations 120.

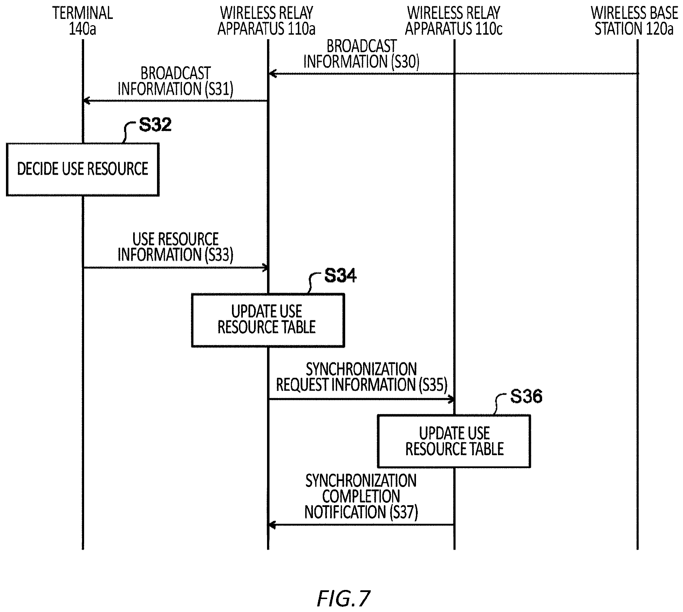

Fig. 7 illustrates an example of the sequence according to the wireless communication method executed in the wireless communication system 5. Here, an example of a sequence in which a cell area is determined by a cell formed by the wireless relay apparatus 110a and a cell formed by the wireless relay apparatus 110c, and a resource to be used by the mobile body 100a within the cell area is allocated will be described.

In S30, the wireless base station 120a transmits broadcast information. The broadcast information includes, for example, information indicating resources available in the wireless relay apparatus 110.

In S31, the wireless relay apparatus 110a transmits broadcast information. The broadcast information includes, for example, area identification information for identifying a cell area and first information indicating a resource available in the cell area. The first information may include information indicating a resource used by the terminal apparatus 140 in the cell area and a resource already used by another terminal apparatus 140. The first information may include information indicating a resource not used by another terminal apparatus 140 among resources used in the cell area.

When receiving the broadcast information, in S32, the terminal apparatus 140a decides a resource to be used, based on the first information. In S33, the terminal apparatus 140a transmits use resource information. The use resource information includes, for example, second information indicating the resource to be used decided by the terminal apparatus 140.

In the wireless relay apparatus 110a, when the communication unit 220 receives the use resource information, in S34, the control unit 200 updates the use resource table. For example, the control unit 200 may add, to the use resource table, information indicating the resource indicated by the second information.

Subsequently, in S35, the communication unit 220 of the wireless relay apparatus 110a transmits synchronization request information to the wireless relay apparatus 110c. The synchronization request information includes area identification information for a cell area and information on a resource used by the terminal apparatus 140a.

When the communication unit 220 of the wireless relay apparatus 110c receives the synchronization request information, in S36, the control unit 200 of the wireless relay apparatus 110c updates a use resource table cell similarly to S34.

Subsequently, in S37, the communication unit 220 of the wireless relay apparatus 110c transmits a synchronization completion notification to the wireless relay apparatus 110a. Note that the synchronization request information and the synchronization completion notification may be a connection-type inter-apparatus synchronization message and an inter-apparatus synchronization message response. In another aspect, the synchronization request information may be transmitted in a connectionless manner.

In the sequence of Fig. 7, a mode in which the wireless relay apparatus 110 manages the use resource table has been illustrated as an example. As another mode, a mode may be adopted in which the use resource table is managed in the wireless base station 120 by the terminal apparatus 140 transmitting the use resource information to the wireless base station 120.

According to the sequence of Fig. 7, when the cell area includes cells formed by a plurality of wireless relay apparatuses 110, the communication unit 220 transmits, to another wireless relay apparatuses 110, the information on the resource used by the terminal apparatus 140a. Accordingly, the use resource information can be synchronized among the plurality of wireless relay apparatuses 110.

As described above, the cell area may be an area including a cell of a single wireless base station 120, may be an area including cells of a plurality of wireless base stations 120, or may be an area including cells of a plurality of wireless relay apparatuses 110. Setting of the cell area is not limited thereto. The cell area may be an area including a cell of a single wireless relay apparatus 110, or may be an area including cells of one or more wireless base stations 120 and cells of one or more wireless relay apparatuses 110. When the cell area including the cells of one or more wireless relay apparatuses 110 is set, it may be allowed to include, in the cell area, cells of the wireless relay apparatuses 110 located within a predetermined number of hops from the wireless base station 120. In addition, the cell area may be an arbitrarily set area.

According to the wireless communication system 5 described above, a resource used by the wireless communication apparatus can be managed within a specific cell area including cells formed by one or more wireless base stations 120 and/or one or more wireless relay apparatuses 110. Accordingly, within such a specific cell area, it is possible to make the resources used by at least neighboring wireless relay apparatuses 110 or terminal apparatuses 140 different from each other. Accordingly, it is possible to prevent conflicts in wireless resources, and, furthermore, it is possible to eliminates need to output radio waves at higher power to cope with communication interference.

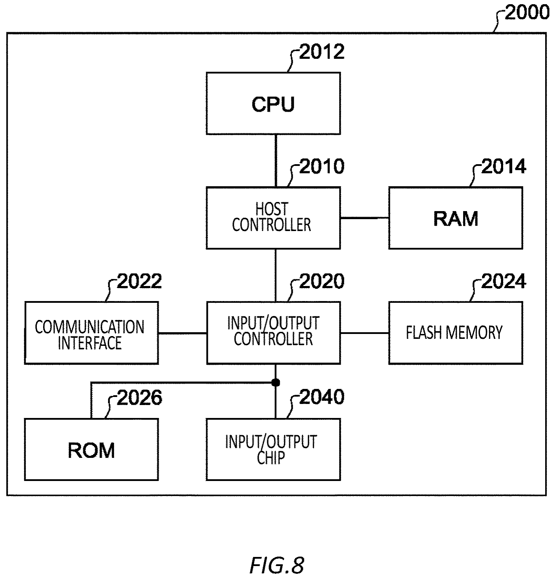

Fig. 8 illustrates an example of a computer 2000 in which a plurality of embodiments of the present invention may be entirely or partially embodied. A program installed in the computer 2000 can cause the computer 2000 to function as a system according to the embodiment or each unit of the system, or various apparatuses such as a wireless base station and a wireless relay apparatus or each unit of the apparatus, execute an operation associated with the system or each unit of the system, or the apparatus or each unit of the apparatus, and/or execute a process according to the embodiment or stages of the process. Such a program may be executed by a CPU 2012 to cause the computer 2000 to execute specific operations associated with some or all of the processing procedures and the blocks of the block diagrams described in the present specification.

The computer 2000 according to the present embodiment includes the CPU 2012 and a RAM 2014, which are connected to each other by a host controller 2010. The computer 2000 also includes a ROM 2026, a flash memory 2024, a communication interface 2022, and an input/output chip 2040. The ROM 2026, the flash memory 2024, the communication interface 2022, and the input/output chip 2040 are connected to the host controller 2010 via an input/output controller 2020.

The CPU 2012 operates according to programs stored in the ROM 2026 and the RAM 2014, thereby controlling each unit.

The communication interface 2022 communicates with another electronic device via a network. The flash memory 2024 stores programs and data used by the CPU 2012 in the computer 2000. The ROM 2026 stores a boot program or the like that is executed by the computer 2000 at the time of activation, and/or a program depending on hardware of the computer 2000. The input/output chip 2040 may also connect various input/output units, such as keyboards, mice, and monitors, to the input/output controller 2020 via input/output ports, such as serial ports, parallel ports, keyboard ports, mouse ports, monitor ports, USB ports, HDMI (registered trademark) ports, or the like.

The program is provided via a computer-readable storage medium or network such as a CD-ROM, a DVD-ROM, or a memory card. The RAM 2014, the ROM 2026, or the flash memory 2024 is an example of a computer-readable storage medium. The program is installed in the flash memory 2024, the RAM 2014, or the ROM 2026 and executed by the CPU 2012. The information processing written in these programs is read into the computer 2000 and provides cooperation between the programs and the above-described various types of hardware resources. An apparatus or method may be configured by implementing the operation or processing of information in accordance with usage of the computer 2000.

For example, when communication is executed between the computer 2000 and an external device, the CPU 2012 may execute a communication program loaded in the RAM 2014 and instruct the communication interface 2022 to perform communication processing based on processing written in the communication program. Under the control of the CPU 2012, the communication interface 2022 reads transmission data stored in a transmission buffer processing region provided in a recording medium such as the RAM 2014 and the flash memory 2024, transmits the read transmission data to the network, and writes reception data received from the network in a reception buffer processing region or the like provided on the recording medium.

In addition, the CPU 2012 may cause all or a necessary portion of a file or a database stored in the recording medium such as the flash memory 2024 to be read into the RAM 2014, and may execute various types of processing on data on the RAM 2014. Next, the CPU 2012 writes the processed data back into the recording medium.

Various types of information such as various types of programs, data, tables, and databases may be stored in the recording medium and subjected to information processing. The CPU 2012 may execute, on the data read from the RAM 2014, various types of processing including various types of operations, information processing, condition judgement, conditional branching, unconditional branching, information search/replacement, or the like described in the present specification and designated by instruction sequences of the programs, to write the results back to the RAM 2014. In addition, the CPU 2012 may retrieve information in a file, a database, or the like in the recording medium. For example, when a plurality of entries, each having an attribute value of a first attribute associated with an attribute value of a second attribute, is stored in the recording medium, the CPU 2012 may retrieve, out of the plurality of entries, an entry with the attribute value of the first attribute specified that meets a condition, read the attribute value of the second attribute stored in the entry, thereby acquiring the attribute value of the second attribute associated with the first attribute meeting a predetermined condition.

The above-described program or software modules may be stored in the computer-readable storage medium on or near the computer 2000. A recording medium such as a hard disk or a RAM provided in a server system connected to a dedicated communication network or the Internet can be used as the computer-readable storage medium. The program stored in the computer-readable storage medium may be provided to the computer 2000 via a network.

A program installed in the computer 2000 to cause the computer 2000 to function as the wireless relay apparatus 110 may operate the CPU 2012 or the like, thereby causing the computer 2000 to function as each unit of the wireless relay apparatus 110. By being read by the computer 2000, the information processing written in these programs functions as each unit of the wireless relay apparatus 110, which is specific means as a result of the software and the above-described various types of hardware resources cooperating with each other. Then, by realizing computation or processing of information to meet an intended use of the computer 2000 in the present embodiment by these specific means, a specific wireless relay apparatus 110 to meet the intended use is constructed.

The program installed in the computer 2000 to cause the computer 2000 to function as the wireless base station 120 may operate the CPU 2012 or the like, thereby causing the computer 2000 to function as each unit of the wireless base station 120. By being read by the computer 2000, the information processing written in these programs functions as each unit of the wireless base station 120, which is specific means as a result of the software and the above-described various types of hardware resources cooperating with each other. Then, by realizing computation or processing of information to meet the intended use of the computer 2000 in the present embodiment by these specific means, a specific wireless base station 120 to meet the intended use is constructed.

Various embodiments have been described with reference to the block diagram or the like. In the block diagram, each block may represent (1) a stage of a process in which operations are executed or (2) each unit of an apparatus responsible for executing operations. Specific steps and units may be implemented by a dedicated circuit, a programmable circuit supplied along with computer-readable instructions stored on a computer-readable storage medium, and/or a processor supplied along with the computer-readable instructions stored on the computer-readable storage medium. The dedicated circuit may include digital and/or analog hardware circuits, and may include integrated circuits (IC) and/or discrete circuits. The programmable circuit may include a reconfigurable hardware circuit including logical AND, logical OR, logical XOR, logical NAND, logical NOR, and other logical operations, a memory element such as a flip-flop, a register, a field programmable gate array (FPGA) and a programmable logic array (PLA), or the like.

The computer-readable storage medium may include any tangible device capable of storing an instruction executed by an appropriate device, so that the computer-readable storage medium having the instruction stored thereon constitutes at least a part of a product including an instruction that may be executed in order to provide means for executing a processing procedure or an operation designated in the block diagram. Examples of the computer-readable storage medium may include an electronic storage medium, a magnetic storage medium, an optical storage medium, an electromagnetic storage medium, a semiconductor storage medium, or the like. More specific examples of the computer-readable storage medium may include a FLOPPY (registered trademark) disk, a diskette, a hard disk, a random access memory (RAM), a read-only memory (ROM), an erasable programmable read-only memory (EPROM or flash memory), an electrically erasable programmable read-only memory (EEPROM), a static random access memory (SRAM), a compact disc read-only memory (CD-ROM), a digital versatile disk (DVD), a BLU-RAY (registered trademark) disk, a memory stick, an integrated circuit card, or the like.

The computer-readable instructions may include an assembler instruction, an instruction-set-architecture (ISA) instruction, a machine instruction, a machine-dependent instruction, a microcode, a firmware instruction, state-setting data, or either of source code or object code written in any combination of one or more programming languages including an object-oriented programming language such as SMALLTALK (registered trademark), JAVA (registered trademark), and C++, or the like, and a conventional procedural programming language such as a "C" programming language or a similar programming language.

The computer-readable instructions may be provided for a processor of a general purpose computer, a special purpose computer, or another programmable data processing apparatus, or to the programmable circuit, locally or via a local area network (LAN), a wide area network (WAN) such as the Internet, or the like, so that the computer-readable instructions are executed to create means for executing the described processing procedure or the operation designated in the block diagram. Examples of the processor include a computer processor, a processing unit, a microprocessor, a digital signal processor, a controller, a microcontroller, or the like.

While the present invention has been described by way of the embodiments, the technical scope of the present invention is not limited to the above-described embodiments. It is apparent to persons skilled in the art that various alterations or improvements can be made to the above described embodiments. It is also apparent from the described scope of the claims that the embodiments to which such alterations or improvements are made can be included in the technical scope of the present invention.

It should be noted that the operations, procedures, steps, stages, or the like of each process performed by an apparatus, system, program, and method shown in the claims, the specification, or the drawings can be performed in any order as long as the order is not indicated by "prior to," "before," or the like and as long as the output from a previous process is not used in a later process. Even if the process flow is described using phrases such as "first" or "next" in the claims, the specification, or the drawings for the sake of convenience, it does not necessarily mean that the process must be performed in this order.

### EXPLANATION OF REFERENCES

5: wireless communication system; 100: mobile body; 110: wireless relay apparatus; 120: wireless base station; 140: terminal apparatus; 180: cell; 200: control unit; 210: storage unit; 220: communication unit; 300: control unit; 310: storage unit; 320: communication unit; 2000: computer; 2010: host controller; 2012: CPU; 2014: RAM; 2020: input/output controller; 2022: communication interface; 2024: flash memory; 2026: ROM; and 2040: input/output chip.

## Claims

1. A wireless base station which performs wireless communication with a wireless relay apparatus, comprising:
a storage unit which stores area identification information for identifying a cell area including a cell formed by at least one of one or more wireless base stations including the wireless base station or one or more wireless relay apparatuses including the wireless relay apparatus; and
a communication unit which transmits, to the wireless relay apparatus, the area identification information and first information indicating a resource available to the wireless relay apparatus within the cell area, wherein
the communication unit receives, from the wireless relay apparatus, second information indicating a resource used by the wireless relay apparatus, and
the wireless base station further comprises
a control unit which performs processing for holding information on the resource used by the wireless relay apparatus in the one or more wireless base stations, based on the second information.

2. The wireless base station according to claim 1, wherein
the second information includes mobility information indicating whether or not the wireless relay apparatus is a movable relay apparatus, and
when it is determined based on the mobility information included in the second information that the wireless relay apparatus is a movable relay apparatus, the control unit performs processing for holding information on the resource used by the wireless relay apparatus in the one or more wireless base stations.

3. The wireless base station according to claim 1 or 2, wherein
when the cell area includes cells of a plurality of wireless base stations including the wireless base station, the communication unit transmits, to another wireless base station among the plurality of wireless base stations, information indicating the resource, which is used by the wireless relay apparatus, indicated by the second information.

4. The wireless base station according to claim 1 or 2, wherein
the communication unit includes the area identification information and the first information in broadcast information and transmits the broadcast information.

5. A wireless communication system comprising:
the wireless base station according to claim 1 or 2; and
the wireless relay apparatus.

6. A program for causing a computer to function as the wireless base station according to claim 1 or 2.

7. A wireless relay apparatus which relays communication between a wireless base station and a terminal apparatus, comprising
a communication unit which receives, from the wireless base station, area identification information for identifying a cell area including a cell formed by at least one of one or more wireless base stations including the wireless base station or one or more wireless relay apparatuses including the wireless relay apparatus, and first information indicating a resource available to the wireless relay apparatus within the cell area, wherein
the communication unit transmits, to another wireless communication apparatus, the area identification information and information indicating the resource available to the wireless relay apparatus within the cell area,
the communication unit receives, from the wireless relay apparatus, second information indicating a resource used by the another wireless communication apparatus, and
the wireless relay apparatus further comprises
a control unit which performs processing for holding information on the resource used by the another wireless communication apparatus in the one or more wireless relay apparatuses, based on the second information.

8. The wireless relay apparatus according to claim 7, wherein
the second information includes mobility information indicating whether or not the another wireless communication apparatus is a movable wireless relay apparatus, and
when it is determined based on the mobility information included in the second information that the another wireless communication apparatus is a movable wireless relay apparatus, the control unit performs processing for holding information on the resource used by the another wireless communication apparatus in the one or more wireless relay apparatuses.

9. The wireless relay apparatus according to claim 7 or 8, wherein
when the cell area includes cell areas of a plurality of wireless relay apparatuses including the wireless relay apparatus, the communication unit transmits, to another wireless relay apparatus among the plurality of wireless relay apparatuses, information indicating the resource, which is used by the another wireless communication apparatus, indicated by the second information.

10. The wireless relay apparatus according to claim 7 or 8, wherein
the communication unit receives the area identification information and the first information from the wireless base station via broadcast information.

11. The wireless relay apparatus according to claim 7 or 8, wherein
the communication unit includes, in broadcast information, the area identification information and the information indicating the resource available to the wireless relay apparatus within the cell area and transmits the broadcast information to the another wireless communication apparatus.

12. A mobile body comprising the wireless relay apparatus according to claim 7 or 8.

13. A wireless communication system comprising:
the wireless relay apparatus according to claim 7 or 8; and
the wireless base station.

14. A program for causing a computer to function as the wireless relay apparatus according to claim 7 or 8.

15. A wireless communication method executed by a wireless base station which performs wireless communication with a wireless relay apparatus, comprising:
storing area identification information for identifying a cell area including a cell formed by at least one of one or more wireless base stations including the wireless base station or one or more wireless relay apparatuses including the wireless relay apparatus;
transmitting, to the wireless relay apparatus, the area identification information and first information indicating a resource available to the wireless relay apparatus within the cell area;
receiving, from the wireless relay apparatus, second information indicating a resource used by the wireless relay apparatus; and
performing processing for holding information on the resource used by the wireless relay apparatus in the one or more wireless base stations, based on the second information.

16. A wireless communication method executed by a wireless relay apparatus which relays communication between a wireless base station and a terminal apparatus, comprising:
receiving, from the wireless base station, area identification information for identifying a cell area including a cell formed by at least one of one or more wireless base stations including the wireless base station or one or more wireless relay apparatuses including the wireless relay apparatus, and first information indicating a resource available to the wireless relay apparatus within the cell area;
transmitting, to another wireless communication apparatus, the area identification information and information indicating the resource available to the wireless relay apparatus within the cell area;
receiving, from the wireless relay apparatus, second information indicating a resource used by the another wireless communication apparatus; and
performing processing for holding information on the resource used by the another wireless communication apparatus in the one or more wireless relay apparatuses, based on the second information.
